# EUROPÄISCHE PATENTANMELDUNG

(11) **EP 1 284 243 A2**
(43) Veröffentlichungstag der Anmeldung: **19.02.2003**
(21) Anmeldenummer: 02018456.0
(22) Anmeldetag: 16.08.2002
(51) Int. Cl.: C03B 11/12, C03B 11/02

(54) **Pressgeformter Glaskörper und Verfahren zu seiner Herstellung**

(30) Priorität: 18.08.2001 DE 10140626
(71) Anmelder: Haacke, Florian W., Dipl.-Ing., 38640 Goslar (DE)
(72) Erfinder: Haacke, Florian W., Dipl.-Ing., 38640 Goslar (DE)
(74) Vertreter: Lins, Edgar, Dipl.-Phys. Dr.jur.

(57) **Zusammenfassung**

Die Herstellung eines pressgeformten Glaskörpers mit einer Dicke von wenigstens einigen Millimetern, bei der schmelzflüssige Glasmasse in eine Form (116) gegossen, in der Form mittels eines Pressstempels (117) gepresst und abgekühlt und anschließend als der pressgeformte Glaskörper aus der Form (116) entnommen gelingt so, dass eine anschließende Nachbearbeitung weitgehend oder ganz überflüssig wird, wenn die schmelzflüssige Glasmasse in der Form (116) mehreren Pressvorgängen unterworfen wird, zwischen denen eine Abkühlung stattfindet, und wenn die Abkühlung so gesteuert wird, dass die Abkühlung der Glasmasse im Außenbereich der Abkühlung im Kern wenigstens angenähert wird (Figur 2).

## Beschreibung

Die Erfindung betrifft ein Verfahren zur Herstellung eines pressgeformten Glaskörpers mit einer Dicke von wenigstens einigen Millimetern, bei dem schmelzflüssige Glasmasse in eine Form gegossen, in der Form mittels eines Pressstempels gepresst und abgekühlt und anschließend als der pressgeformte Glaskörper aus der Form entnommen wird. Die Erfindung betrifft ferner einen pressgeformten Glaskörper, der nach dem Verfahren herstellbar ist.

Die Herstellung von dreidimensionalen Glaskörpern, also Glaskörpern, die neben einer flächigen Ausbildung eine Dicke von wenigstens einigen Millimetern aufweisen, erfolgt dadurch, dass schmelzflüssige Glasmasse in eine Form gegossen wird, wo sie einer Abkühlung unterzogen wird. Bevor sich die Glasmasse verfestigt, wird sie mit einem Pressstempel gepresst, um durch den Pressstempel im Zusammenwirken mit der Form die gewünschte Formgebung herbeizuführen. Zur Beschleunigung der Abkühlung können sowohl die Form als auch der Pressstempel, beispielsweise durch Wasser, gekühlt sein, um die Wärme der Glasmasse schneller abzuführen.

Derart hergestellte pressgeformte Glaskörper bedürfen einer Nachbearbeitung, wenn es auf die Qualität der Oberfläche ankommt. Wenn beispielsweise eine asphärische Linse mit einer napfähnlichen Form und einem planen Pressstempel hergestellt wird, fällt die vom Pressstempel beaufschlagte plane Oberfläche beim Abkühlen ein. Um eine Verzerrung der Lichtstrahlung durch die Linse zu vermeiden, bedarf es daher einer Nacharbeitung, zumindest der planen Oberfläche. Die Nachbearbeitung erhöht die Herstellungskosten des Glaskörpers deutlich. Versuche, die Nachbearbeitung zu vermeiden oder jedenfalls auf ein geringes Maß abzusenken, sind erfolglos geblieben.

Die vorliegende Erfindung geht daher von der Problemstellung aus, die Herstellung eines pressgeformten Glaskörpers so zu verbessern, dass eine Nachbearbeitung des Glaskörpers nicht oder nur noch in geringem Maße erforderlich ist.

Ausgehend von dieser Problemstellung ist ein Verfahren der eingangs erwähnten Art erfindungsgemäß dadurch gekennzeichnet, dass die schmelzflüssige Glasmasse in der Form mehrfachen Pressvorgängen unterworfen wird, zwischen denen eine Abkühlung stattfindet, und dass die Abkühlung so gesteuert wird, dass die Abkühlung der Glasmasse im Außenbereich der Abkühlung im Kern wenigstens angenähert wird.

Der Erfindung liegt die Erkenntnis zugrunde, dass das Einfallen der Oberfläche des pressgeformten Glaskörpers auf starke Temperaturunterschiede in der Glasmasse während des Abkühlens zurückzuführen ist. Aus diesem Grund kommt es zu keiner gleichmäßigen Schrumpfung des Glaskörpers beim Abkühlvorgang, wodurch die Unregelmäßigkeiten an der Oberfläche entstehen. Die auftretenden Temperaturunterschiede sind bei den herkömmlichen Verfahren noch dadurch verstärkt worden, dass eine verstärkte Abkühlung von der Außenseite der Glasmasse her vorgenommen worden ist, sodass die Außenseite der Glasmasse schnell herunter gekühlt worden ist, während der Kern diese Abkühlung aufgrund der eigenen Wärmekapazität nur sehr zeitverzögert und mit einer wesentlich geringeren Abkühlgeschwindigkeit erfolgen kann. Erfindungsgemäß wird die Abkühlung der Glasmasse nunmehr auf eine größere Anzahl von Abkühlungsschritten verteilt, in dem mehrere Pressvorgänge stattfinden und während der Pressvorgänge selbst und/oder zwischen den Pressvorgängen können schrittweise Abkühlvorgänge stattfinden, sodass nach durchgeführten Temperaturabsenkungen an der Außenseite auch wieder ein Temperaturausgleich zwischen Kern und Außenseite stattfinden kann. Dadurch findet eine Steuerung der Abkühlung in dem erfindungsgemäßen Sinne statt, da es zu einer verbesserten Angleichung der Abkühlung des Kerns und der Außenbereiche der Glasmasse kommt.

Für die meisten Formgebungen des Glaskörpers gelingt die erfindungsgemäße Annäherung der Abkühlung der Glasmasse im Außenbereich an die Abkühlung im Kern nur dann, wenn zur Angleichung der Temperatur des Außenbereichs an die Temperatur des Kerns auch eine Aufheizung des Außenbereichs der Glasmasse vorgenommen wird. Während der angestrebten Abkühlung der Glasmasse wird diese somit im Außenbereich zwischenzeitlich wieder aufgeheizt, wodurch die Abkühlung insgesamt naturgemäß verlängert wird, eine erfindungsgemäße Annäherung der Abkühlung im Außenbereich an die Abkühlung im Kern jedoch erzielt wird.

Die Kombination der Maßnahme der mehrfachen Pressvorgänge mit der erfindungsgemäßen Steuerung der Abkühlung führt dazu, dass pressgeformte Glaskörper als Zwischenprodukt oder als Endprodukt hergestellt werden können, die in dem aus der Form entnommenen Zustand die Sollform ohne Nachbearbeitung, jedenfalls ohne wesentliche Nachbearbeitung, aufweisen. Dadurch wird eine erheblich rationellere Herstellung dieser Glaskörper möglich.

Eine schnelle und dennoch über die Glasmasse homogene Abkühlung ist dadurch erreichbar, dass die Glasmasse mit einem Kühlfluid direkt oder indirekt gekühlt und zwischenzeitlich von den Außenseiten wenigstens einmal so aufgeheizt wird, dass die Temperatur der Außenbereiche der Glasmasse an die Temperatur des Kerns angepasst wird. Da die für die Abkühlung des Kerns erforderliche Wärmeabführung durch die Außenbereiche hindurch erfolgen muss, setzt die Abkühlung des Kerns eine niedrigere Temperatur der Außenbereiche voraus. Durch die vorgeschriebene Maßnahme werden die Einfallvorgänge beim Abkühlen dadurch vermieden, dass die Außenbereiche der Glasmasse nach Art einer Oszillation gegenüber dem Kern abgekühlt und anschließend durch das Aufheizen etwa auf die Temperatur des Kern wieder erwärmt werden. Durch die mehrfachen Pressvorgänge kann eine geeignete Abkühlung auf zahlreiche Einzelschritte verteilt werden und darüber hinaus etwaige durch eine anfängliche Abkühlung angelegte Einfallstellen durch eine nachfolgende Pressung noch korrigiert werden.

In einer bevorzugten Ausführungsform des erfindungsgemäßen Verfahrens sind wenigstens drei Pressvorgänge mit zwischengeschalteten Kühlungen vorgesehen.

Die Kühlungen können durch die Verwendung einer kühlbaren Form vorgenommen oder vorzugsweise unterstützt werden. Die vorzugsweise vorgesehene Erwärmung der Außenbereiche kann durch eine direkte oder indirekte Einwirkung einer Gasflamme, durch Infrarotstrahlung o. ä., aber auch durch eine heizbar ausgebildete Form erfolgen.

Die Erfindung erlaubt die Herstellung optischer Glaskörper, beispielsweise in Form einer Linse, ohne Nachbearbeitung. Auch wenn der Glaskörper eine ebene, durch einen Pressstempel geformte Oberfläche aufweist, lassen sich störende Einfallstellen vermeiden. Daher kann die ebene Oberseite auch in sich profiliert, beispielsweise mit Rillungen versehen werden.

Die Erfindung soll im Folgenden anhand eines in der Zeichnung dargestellten Ausführungsbeispiels näher erläutert werden. Es zeigen:
- Figur 1 -: eine schematische Darstellung eines Rundtisches, der in zwanzig Schritten eine volle Umdrehung ausführt und somit zwanzig Arbeitsstationen ermöglicht
- Figur 2 -: eine schematische Darstellung der Anordnung eines Rundtisches mit einer Lastzuführung in der Funktionsbelegung gemäß Figur 1
- Figur 3 -: einen Schnitt durch den Rundtisch gemäß der Linie A-A in Figur 2.

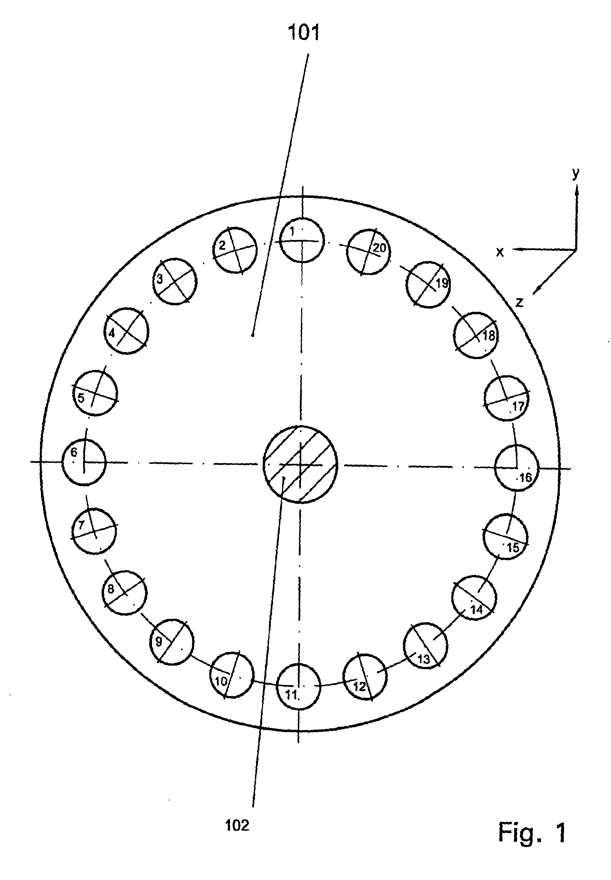

Der in Figur 1 dargestellte Rundtisch 101 ist um eine Mittelachse 102 in zwanzig Schritten drehbar ausgebildet, sodass relativ zu dem Rundtisch 101 zwanzig Arbeitsstationen 1... 20 auf einem Radius in gleichen Abständen angeordnet sind.

In einer praktischen Ausführungsform sind die Stationen wie folgt belegt:
- 1: Speisen
- 2: Leer
- 3: Pressen
- 4: Kühlen oben und unten
- 5: Luftformer oben und Kühlen unten
- 6: Kühlen oben und unten
- 7: Nachpressen 1
- 8: Kühlen oben und unten
- 9: Kühlen oben und unten
- 10: Kühlen oben und unten
- 11: Nachpressen 2
- 12: Kühlen oben und unten
- 13: Kühlen oben und unten
- 14: Kühlen oben und unten
- 15: Nachpressen 3
- 16: Kühlen oben und unten
- 17: Entnahme und Lösehammer von unten
- 18: Leer
- 19: Reinigen
- 20: Leer

Es wird somit deutlich, dass der dargestellte Rundtisch 101 für vier Pressvorgänge vorgesehen ist, zwischen denen an den einzelnen Stationen Kühlvorgänge in kleinen Schritten vorgenommen werden, wobei zwischen den Kühlschritten immer wieder ein Temperaturausgleich zwischen dem Außenbereich und dem Kern der Glasmasse möglich ist.

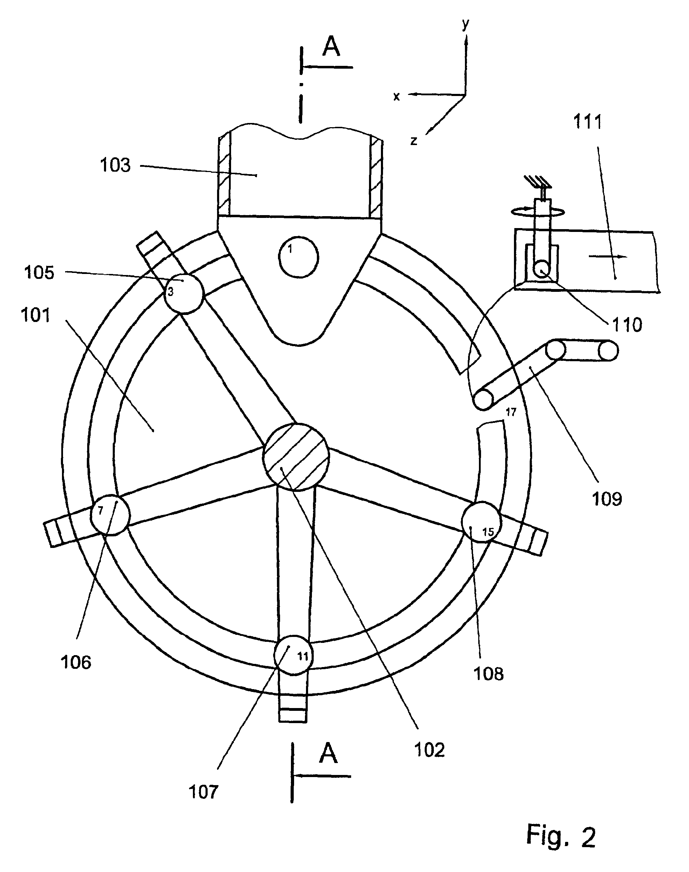

Figur 2 zeigt, dass ein Speiserkanal 103 die Glasschmelzen über einen Speiser 104 in der Stationsnummer 1 zuführt. An der Station 3 ist eine Hauptpresse 105, an der Station 7 eine erste Nachpresse 106, an der Station 11 eine zweite Nachpresse 107 und an der Station 15 eine dritte Nachpresse 108 vorgesehen. Nach einer abschließenden Kühlung befindet sich an der Station 17 eine Entnahmevorrichtung 109, die die Form mit der abgekühlten und geformten Glasmasse einer Wendevorrichtung 110 übergibt, die die Form wendet, sodass die geformte Glasmasse aus der Form herausfällt und auf ein Transportband 111 abgelegt wird.

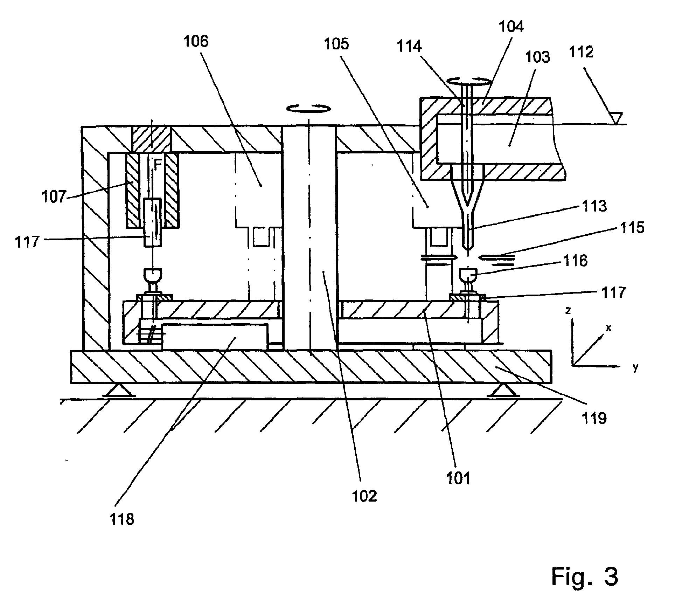

Die Schnittdarstellung in Figur 3 lässt den bis zu einem Füllstand 112 gefüllten Speiserkanal 103 erkennen, der in den Speiser 104 mündet. Das Glas wird aus einer im Boden des Speisers 104 eingesetzten Düse 113 zugeführt, wobei die Düse 113 mit einem gesteuerten Plungerkolben 114 geöffnet und verschlossen werden kann, um die benötigte Glasmenge genau zu dosieren. Unterhalb der Düse 113 befindet sich eine Schere 115 zum Abschneiden des Glasfadens der geschlossenen Düse 113. Unterhalb der Düse 113 befindet sich in der Stationsnummer 1 eine Form 116 auf einem Formenträger 117. Nach dem Befüllen der Form 116 mit der Glasmasse gelangt die Form in der schematisch angedeuteten Station 3 in Hauptpresse 105 und in der Station 7 einer ebenfalls schematisch angedeuteten ersten Nachpresse 106.

In der Station 11 befindet sich die im Schnitt dargestellte zweite Nachpresse 107, deren mit der Form 116 zusammenwirkender Pressstempel 117 dargestellt ist.

Figur 3 lässt noch einen Schrittantrieb 118 für die Mittelachse 102 des Rundtisches 101 erkennen. Der Rundtisch 101 ist auf einem Rahmen 119 gelagert, der als Verschieberahmen ausgebildet sein kann.

Die Kühleinrichtungen und ggf. Aufheizeinrichtungen in der Stationen zwischen der Hauptpresse 105 und die Nachpresse 106, 107, 108 und der Entnahmeeinrichtung 109 sind nicht im Einzelnen dargestellt und können durch Luftdüsen, Gasflammendüsen usw. bestehen. Zusätzlich können die Formen 116 und/oder Pressstempel 117 gekühlt, beispielsweise wassergekühlt, ausgebildet sein.

## Patentansprüche

1. Verfahren zur Herstellung eines pressgeformten Glaskörpers mit einer Dicke von wenigstens einigen Millimetern, bei dem schmelzflüssige Glasmasse in eine Form (116) gegossen, in der Form mittels eines Pressstempels (117) gepresst und abgekühlt und anschließend als der pressgeformte Glaskörper aus der Form (116) entnommen, **dadurch gekennzeichnet, dass** die schmelzflüssige Glasmasse in der Form (116) mehreren Pressvorgängen unterworfen wird, zwischen denen eine Abkühlung stattfindet und dass die Abkühlung so gesteuert wird, dass die Abkühlung der Glasmasse im Außenbereich der Abkühlung im Kern wenigstens angenähert wird.

2. Verfahren nach Anspruch 1, **dadurch gekennzeichnet, dass** wenigstens einmal zwischen den Pressvorgängen eine Aufheizung der Außenbereiche der Glasmasse vorgenommen wird.

3. Verfahren nach Anspruch 2, **dadurch gekennzeichnet, dass** die Glasmasse mit einem Kühlfluid direkt oder indirekt gekühlt und zwischenzeitlich an den Außenseiten wenigstens einmal so aufgeheizt wird, dass die Temperatur der Außenbereiche der Glasmasse an die Temperatur des Kerns angepasst wird.

4. Verfahren nach einem der Ansprüche 1 bis 3, **gekennzeichnet durch** wenigstens drei Pressvorgänge mit zwischengeschalteten Kühlungen.

5. Verfahren nach einem der Ansprüche 1 bis 4, **gekennzeichnet durch** die Verwendung einer kühlbar und/oder heizbar ausgebildeten Form (116).

6. Verfahren nach einem der Ansprüche 1 bis 5, **dadurch gekennzeichnet, dass** die Form (116) napfförmig ausgebildet ist und die Glasmasse mit einer ebenen Oberseite hergestellt wird.

7. Pressgeformter Glaskörper als Zwischenprodukt oder Endprodukt mit einer Dicke von wenigstens einigen Millimetern, hergestellt in einer Pressform (116) mittels eines Pressstempels (117) und herstellbar mit dem Verfahren nach einem der Ansprüche 1 bis 6, **dadurch gekennzeichnet, dass** er in dem aus der Form (116) entnommenen Zustand seine Sollform ohne Nachbearbeitung aufweist.

8. Glaskörper nach Anspruch 7 in Form einer Linse.
